Europäisches Patentamt

European Patent Office

Office européen des brevets

(11) Publication number: **0 333 965**
**A2**

(12) # EUROPEAN PATENT APPLICATION

(21) Application number: **88500061.2**

(51) Int. Cl.4: **A01K 73/02**

(22) Date of filing: **21.06.88**

(30) Priority: **21.03.88 ES 8800853**

(43) Date of publication of application:
**27.09.89 Bulletin 89/39**

(84) Designated Contracting States:
**BE DE FR GB GR IT NL SE**

(71) Applicant: **Pineiro Campelo, José**
**Fernández Ladreda, 48**
**E-36003 Pontevedra(ES)**

(72) Inventor: **Pineiro Campelo, José**
**Fernández Ladreda, 48**
**E-36003 Pontevedra(ES)**

(74) Representative: **Lopez Medrano, Santiago**
**Gran Via, 40 -5.**
**E-28013 Madrid(ES)**

(54) **Improvements for botton trawl net mouths.**

(57) Improvements in Trawling gear mouths by incorporation of an independent sliding support or skid (5), elongated and curved in shape, which may swing independently of the mouth's forward angle or be set at a fixed angle. The skid possesses a watertight compartment in its forward part, containing at least one set of bearings, and is equipped with the fixtures necessary for attachment and to allow swivelling. At the after end of the skid (5) is a small fixed-angle rudder (6). On the inner surface of the mouth, two compensating fins (1) are affixed at different heights. These are equipped with regulating mechanisms and are mutually independent. While designed chiefly for bottom trawling, without the skid (5) this equipment can also be extremely useful in middle and surface trawling.

FIG. 4

The invention here described entails a new system to ease the movement of trawl mouth beams along the sea bed. The new parts are a mobile swinging skid and two regulated fins affixed to the trawl mouth beam.

Clearly, "in trawl fishing, the net opening should have the maximum expansive force while offering the minimum resistance of movement". This observation, by S.L. Okonski and L.W. Martini in their book "Fishing Arts and Methods", describes perfectly the need to seek light openings which do not cause too much drag while at the same time providing the greatest possible expansive force, so that optimum operating conditions prevail - that is, the maximum aperture size at all times for whatever type of tackle is used.

The normal type of beam found today consists of a single, elongated rectangular plate, either flat or slightly curved, the entire surface of whose underside always rests directly on the sea bed. As the beam's underside scrapes along the bottom, it naturally offers a lot of drag which the lightening holes provided are insufficient to counteract. And then furthermore these mouths have very little expansive force, due to the fact that the cables leading from the boat are attached at only one single point, making constant manual manipulation necessary to keep the mouth at an angle which will ensure maximum expansion and optimum performance. Another disadvantage of conventional trawl beams is the enormous amount of wear and tear on their undersides arising from their constant scraping on the sea bed. As this is all one piece, it has to be replaced at rather brief intervals, or at least patched - an expansive process which affects the efficiency of the gear. Then finally, the mass of the beam dragging along the sea bed throws up clouds of mud and startles the fish.

There are at present, then, a number of practical drawbacks in the design of the trawl mouth, which affect its fishing performance and further entail a considerable additional cost, in manpower needed to steady the trawl mouth and in the heavy fuel consumption of the extremely powerful engines required to drag it.

The purpose of this invention is eliminate all these problems by furnishing a practically drag-free mouth which adapts to all kinds of seabed with minimum surface-to-surface contact and hence a reduction in the resistance to forward movement. We estimate the drag reduction over conventional systems at some 60%. In addition to this, the trawl mouth is automatically steadied to provide maximum expansive force which can be uniformly controlled under any conditions.

The equipment consists of an independent sliding support or skid which, attached to the bottom of the beam, can swing independently of the angle of the trawl mouth. Its elongated shape and narrow base furnish a very small area of contact with the sea bed, thus minimising the pull effort required to move the trawl. Inside the trawl mouth, two mutually independent compensating fins are affixed at different heights. These are regulated by tensors, steadying the mouth at all times and increasing the expansive force. Variation in their angles increases or decreases total surface area of the mouth, thus providing the ideal resistance for the type of work required.

We shall now look at some of the applications of this invention with reference to the attached drawings and diagrams.

The first figure is a side view of a trawl mouth equipped with the fins as described.

The second figure is a side view of the skid.

The third figure is a section diagram showing the ideal configuration for the element anchoring the skid to the underside of the beam.

The fourth figure is a side view of the complete assembly, with the skid attached to the beam.

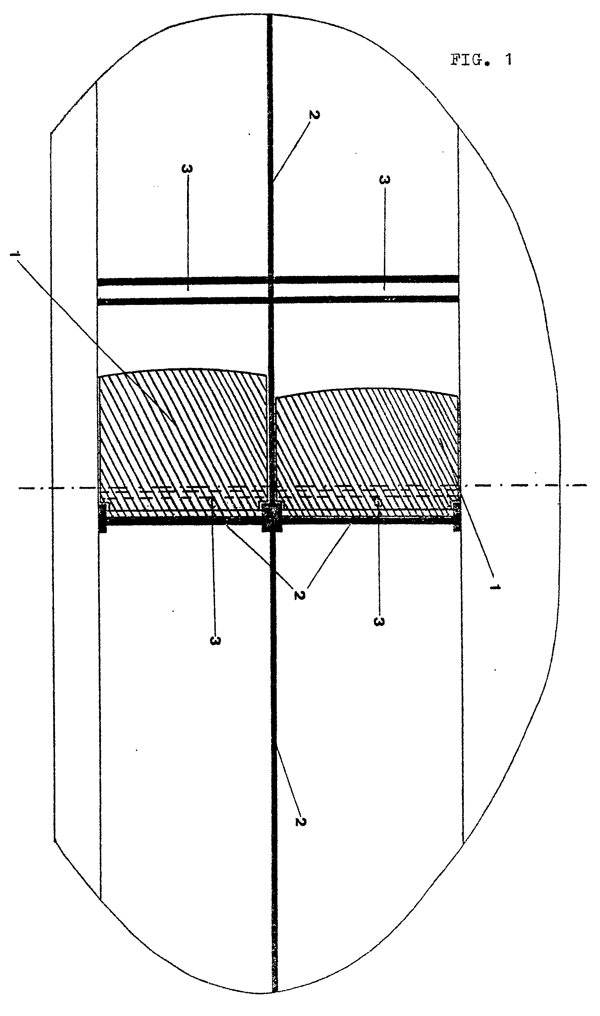

In figure 1 we see the placement of the two fins -1-with rectangular notches cut close to the after end of each wing to form splines which slot into the vertical brackets -2-. These, together with the horizontal brackets -2- , provide balance reinforcement for the trawl mouth. In the central area of the mouth, next to the rear fin base -1-, and in the forward half of the mouth, vertical, lengthwise slots -3- are cut to ease the pressure on the gear.

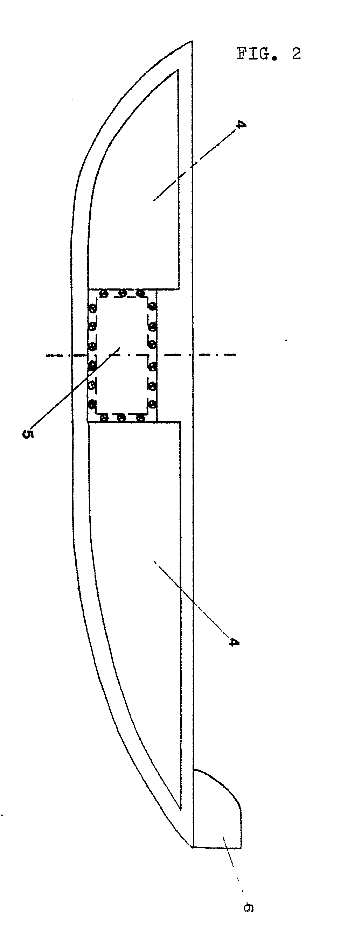

Figure 2 shows the ideal structure of the skid -4-, whose forward section contains a watertight compartment -5-to hold the hinge and the elements anchoring the skid to the beam -7,8-. At the rear end of the skid -4- is a little fixed-angle rudder -6-.

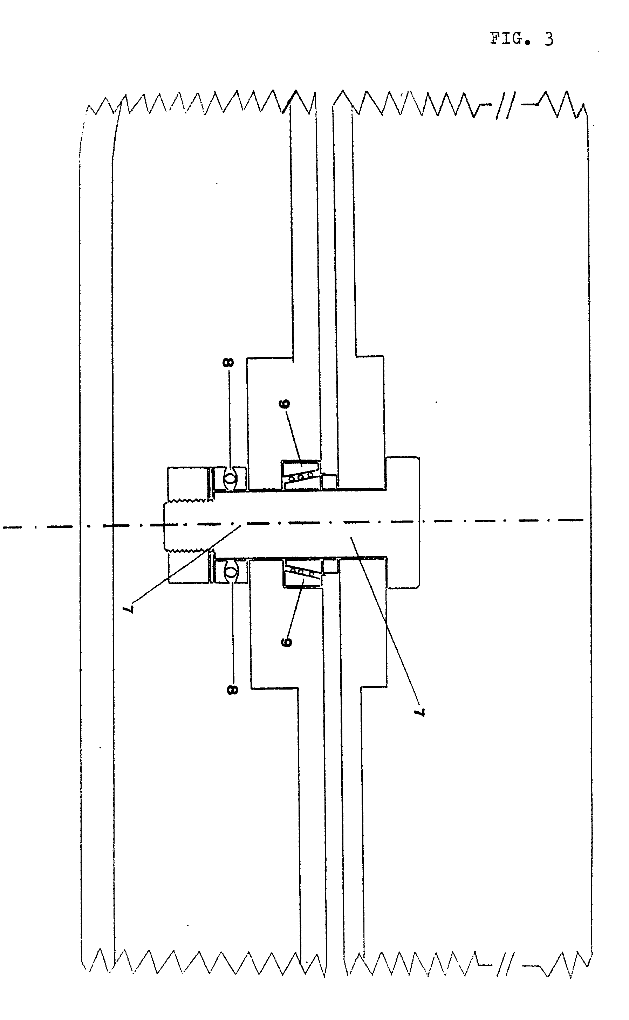

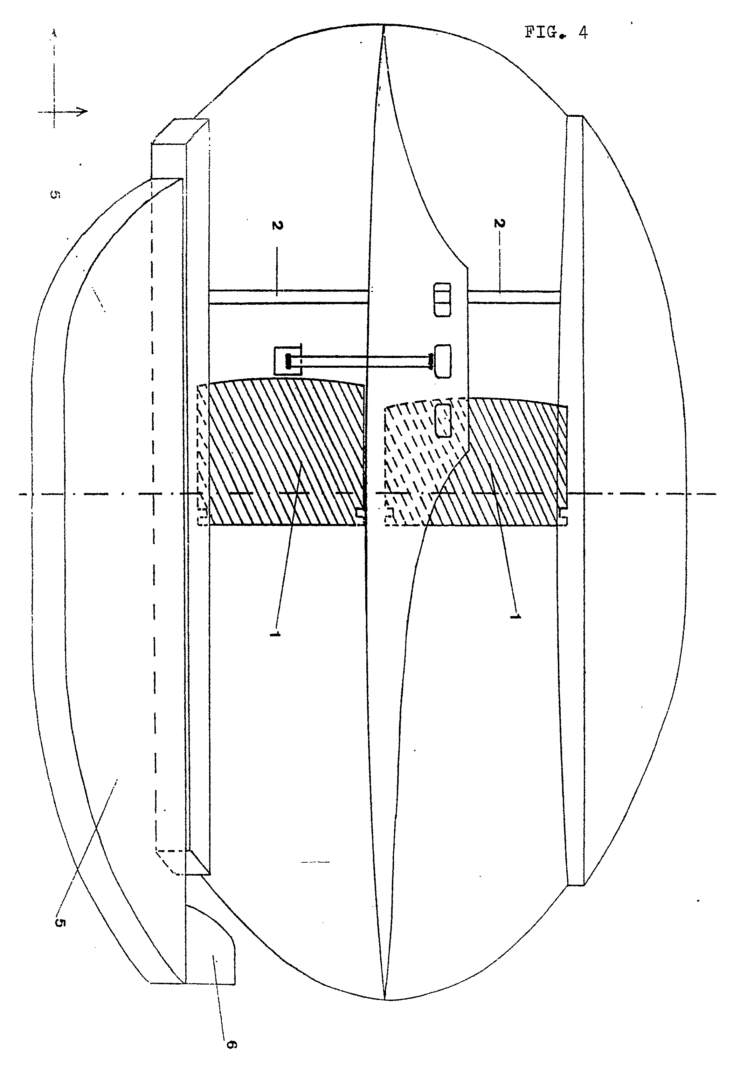

In figure 3, the bolt -7- secures the skid -4- to the beam, which rests on a bronze separator with tapered roller-bearings -9- above and different bearings -8- below, thus allowing it to swing independently of the skid -4-. Bearings -8- are contained within the watertight compartment -4-, as is the lower part of the bolt -7-, whose end screws into its base, while the tapered bearing -9- are housed in watertight retaining seals.

A possible variation, where operating conditions so require, is to maintain the mouth at a fixed angle with the skid. For this purpose, an angle-piece is inserted between the beam and the skid, front and rear. These blade-shaped pieces come in different sizes according to the forward angle required, and are naturally interchangeable.

From the foregoing we can gain a clear idea of the practical advantages attaching to this easily-applied invention: chief among these is economy, given the saving in fuel to be derived from the incorporation of the skid as running base for the trawl mouth. The skid will always run parallel to the ship's course, its minimal surface contact providing the lowest possible drag factor and thus significantly reducing the engine thrust requirement. As they are no longer in direct contact with the sea bed, trawl beams will naturally suffer much less wear, while catches may be expected to benefit from the absence of the mud-cloud thrown up by conventional tackle. Better catches may also be achieved as the reduced power requirement permits the use of larger nets with mouths held constantly at maximum aperture. The elongated skid shape, as well as reducing contact surface, allows for better adaptation to irregularities in the sea bed, thus eliminating the tendency of conventional tackle to jump and cause constant tugging on the towing cables, and hence affording greater stability in the trawl mouth.

The attachment of compensating fins to the inner trawl mouth provides greater expansive force with less surface area and weight than in conventional gear. The capacity for instant adjustment allows for permanent stabilisation, thus improving performance on any type of sea bed. The little rudders at the rear end of the skid are set at a fixed angle in such a way as to steer the skid ever outwards. This means that the trawl mouth is always fully open, even when the ship initiates a turn.

When the dimensions of the trawl mouth so dictate, two skids may be attached, thus providing more even weight distribution. These would operate in parallel, either swinging or fixed as circumstances demand at any given time.

Having provided a full description of the nature and purpose of the invention, it remains only to state that any subsequent modification in the details referring to this invention shall be considered as protected by the same patent provided that it entails no essential alteration, change or modification to the purpose here described.

## Claims

1 - Improvements for bottom trawl net mouths, whose essential features consist in the placement on the inner mouth face of two compensating fins, located at different heights, while the underside of the mouth is affixed atop a sliding support, or skid, regular, elongated and curved in shape, whose underside tapers to form a narrow contact surface.

2 - Improvements for bottom trawl net mouths, as described in Claim 1, whose essential feature resides in the fact that the compensating fins situated in the mouth can be regulated and are mutually independent.

3 - Improvements for bottom trawl net mouths, as described in Claim 1, whose essential feature resides in the fact that the forward section of the sliding support or skid there is a watertight compartment containing at least one set of opposing bearings plus a part of the element securing the skid to the mouth plate, this element further comprising at least one other set of bearings housed in watertight retaining seals; and further in that a small, fixed-angle rudder is affixed to the after end of the skid.

FIG. 1

FIG. 2

FIG. 3

FIG. 4